(19) Europäisches Patentamt / European Patent Office / Office européen des brevets

(11) **EP 4 682 310 A1**

(12) **EUROPEAN PATENT APPLICATION**
published in accordance with Art. 153(4) EPC

(43) Date of publication:
**21.01.2026 Bulletin 2026/04**

(21) Application number: **24770901.7**

(22) Date of filing: **12.03.2024**

(51) International Patent Classification (IPC):
*D07B 1/06* (2006.01)   *B60C 9/00* (2006.01)
*B60C 9/20* (2006.01)   *B60C 19/00* (2006.01)

(52) Cooperative Patent Classification (CPC):
**B60C 9/00; B60C 9/20; B60C 19/00; D07B 1/06**

(86) International application number:
**PCT/JP2024/009635**

(87) International publication number:
**WO 2024/190796 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2023 JP 2023040155**

(71) Applicant: BRIDGESTONE CORPORATION
Chuo-ku
Tokyo 104-8340 (JP)

(72) Inventors:
• **SATO Takayuki**
  **Tokyo 104-8340 (JP)**
• **SHIZUKU Takahisa**
  **Tokyo 104-8340 (JP)**
• **KAWASHIMA Keisuke**
  **Tokyo 104-8340 (JP)**
• **TOKUTOMI Kazutaka**
  **Tokyo 104-8340 (JP)**

(74) Representative: **Marks & Clerk LLP**
**15 Fetter Lane**
**London EC4A 1BW (GB)**

(54) **STEEL FILAMENT, PLATED STEEL FILAMENT, REINFORCING CORD FOR BELT LAYER OF TIRE, AND TIRE**

(57)    An object of the present disclosure is to provide a steel filament derived from recycled iron, which is resistant to breakage even if the diameter is small, and the solution is a steel filament derived from recycled iron, wherein an N element amount is 60 mass ppm or more, a C element amount is 0.7 to 0.85 mass%, a Cu element amount is 0.01 to 0.4 mass%, and a Cr element amount is 0.05 to 0.3 mass%.

EP 4 682 310 A1

**Description**

TECHNICAL FIELD

The present disclosure relates to a steel filament, a plated steel filament, a reinforcing cord for a belt layer of a tire, and a tire.

BACKGROUND

In recent years, from the viewpoint of resource recycling, it has been required to use recycled materials for various members used in tires. For example, PTL 1 refers to the use of fibers made from recycled organic fibers, particularly regenerated polyethylene terephthalate (PET), as reinforcing members for tires.

CITATION LIST

Patent Literatures

PTL 1: EP 3753965 A1

SUMMARY

(Technical Problem)

On the other hand, as reinforcing members for tires, in addition to organic fibers, steel cords are also used. Therefore, from the viewpoint of resource recycling, the use of steel cords made from recycled iron as a raw material has been required.
However, steel cords taken from scrap iron or from tires may contain coating materials such as plating and various additives, and these are often included as impurities in the recycled iron. When manufacturing steel cords using such recycled iron as a raw material, there is a problem that the steel filament, which becomes the wire (filament) of the steel cord, is likely to break during the drawing process in the production of the steel filament.
As a method for solving this problem, generally, there is a method of further refining the recycled iron to remove impurities, or a method of processing the recycled iron into a steel filament with a large diameter that is less likely to break. However, further refining the iron not only increases the number of steps and complicates the process, but also consumes a lot of energy and increases $CO_2$ emissions, which is undesirable from an environmental perspective. In addition, if the recycled iron is processed into a steel filament with a large diameter that is less likely to break, and a steel cord made from such a steel filament is used as a reinforcing member for a tire, the steel filament cannot follow the deformation of the tire, leading to a decrease in the durability of the reinforcing member and the tire.
Therefore, the present disclosure addresses the problem of providing a steel filament derived from recycled iron, which is resistant to breakage even if the diameter is small, thereby solving the above problems of the prior art.
Further, the present disclosure addresses the additional problem of providing a plated steel filament, a reinforcing cord for a belt layer of a tire, and a tire, using such a steel filament derived from recycled iron.

(Solution to Problem)

The gist configuration of the steel filament, plated steel filament, reinforcing cord for a belt layer of a tire, and tire of the present disclosure for solving the above problems is as follows.

[1] A steel filament derived from recycled iron,
wherein an N element amount is 60 mass ppm or more, a C element amount is 0.7 to 0.85 mass%, a Cu element amount is 0.01 to 0.4 mass%, and a Cr element amount is 0.05 to 0.3 mass%.
[2] The steel filament according to [1], wherein the Cu element amount is 0.05 to 0.4 mass%.
[3] The steel filament according to [1] or [2], wherein a diameter is 0.25 mm to 0.6 mm.
[4] A plated steel filament comprising the steel filament according to any one of [1] to [3] and a plating layer covering the steel filament,
wherein a total Cu element amount in the steel filament and the plating layer is 0.2 to 1.0 mass%.
[5] A reinforcing cord for a belt layer of a tire, comprising the steel filament according to any one of [1] to [3].
[6] A tire comprising the steel filament according to any one of [1] to [3].
[7] The tire according to [6], comprising a belt layer including the steel filament and a belt protective layer disposed on a tire radial direction outer side of the belt layer,
wherein a total strength of the belt layer and the belt protective layer is 40 to 120 kN.

(Advantageous Effect)

According to the present disclosure, it is possible to provide a steel filament derived from recycled iron, which is resistant to breakage even if the diameter is small.

Further, according to the present disclosure, it is possible to provide a plated steel filament, a reinforcing cord for a belt layer of a tire, and a tire, using such a steel filament derived from recycled iron.

BRIEF DESCRIPTION OF THE DRAWINGS

In the accompanying drawings:

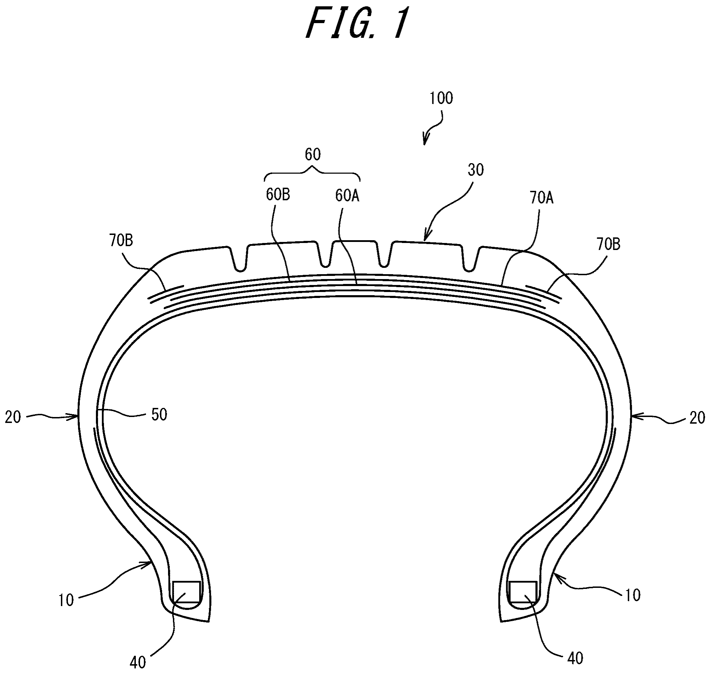

FIG. 1 is a cross-sectional view illustrating one embodiment of a tire of the present disclosure.

DETAILED DESCRIPTION

Hereinafter, the steel filament, plated steel filament, reinforcing cord for a belt layer of a tire, and tire of the present disclosure will be exemplified and described in detail based on embodiments thereof.

<Definitions>

The compounds described in the present specification may be partially or entirely derived from fossil resources, biological resources such as plant resources, or recycled resources such as used tires. Further, they may be derived from a mixture of any two or more of fossil resources, biological resources, and recycled resources.

In the present specification, the N (nitrogen) element amount, C (carbon) element amount, Cu (copper) element amount, Cr (chromium) element amount, and Fe (iron) element amount of the steel filament, as well as the total Cu element amount in the steel filament and the plating layer of the plated steel filament, refer to the ladle value (i.e., the ladle value measured for the molten steel) when the raw steel material is in a molten state, and are values measured by spark discharge emission spectroscopic analysis.

<Steel Filament>

The steel filament of the present embodiment is a steel filament (wire rod) derived from recycled iron. The steel filament of the present embodiment is characterized in that the N element amount is 60 mass ppm or more, the C element amount is 0.7 to 0.85 mass%, the Cu element amount is 0.01 to 0.4 mass%, and the Cr element amount is 0.05 to 0.3 mass%.

Since the steel filament of the present embodiment is derived from recycled iron, it can contribute to the recycling of resources.

Further, the steel filament of the present embodiment has a C element amount of 0.85 mass% or less, and by using a steel material (recycled iron) with a C element amount of 0.85 mass% or less, ductility of the steel material can be ensured, and even when processed into a steel filament with a small diameter, breakage can be prevented.

Therefore, the steel filament of the present embodiment is derived from recycled iron and is resistant to breakage even if the diameter is small.

The steel filament of the present embodiment is derived from recycled iron. The recycled iron serving as the raw material for the steel filament of the present embodiment is not particularly limited as long as it is recycled, and may be derived from scrap iron or steel cord taken from tires, among others. Further, from the viewpoint of reducing $CO_2$ emissions, it is preferable that the recycled iron is derived from an electric furnace (electric furnace steelmaking method). In the electric furnace steelmaking method, for example, an arc discharge is generated in an electric furnace, the raw material is melted by the heat of the discharge, impurities are removed, and iron (steel material) can be obtained. On the other hand, in the blast furnace method, which is generally used in conventional steelmaking, for example, iron ore is reduced using coke derived from coal in a blast furnace to obtain iron (steel material), and thus a large amount of $CO_2$ is inevitably generated. In general, the amount of $CO_2$ emissions in an electric furnace is about one-fourth that in a blast furnace, so by using recycled iron derived from an electric furnace for the steel filament, $CO_2$ emissions can be greatly reduced.

The steel filament of the present embodiment is characterized in that the N (nitrogen) element amount is 60 mass ppm or more, the C (carbon) element amount is 0.7 to 0.85 mass%, the Cu (copper) element amount is 0.01 to 0.4 mass%, and the Cr (chromium) element amount is 0.05 to 0.3 mass%. The steel filament of the present embodiment can be produced using recycled iron having an N (nitrogen) element amount of 60 mass ppm or more, a C (carbon) element amount of 0.7 to 0.85 mass%, a Cu (copper) element amount of 0.01 to 0.4 mass%, and a Cr (chromium) element amount of 0.05 to 0.3 mass% as a raw material. Note that the steel filament of the present embodiment preferably has iron as a main component, with an Fe (iron) element amount of 98 mass% or more.

The N (nitrogen) element amount of the steel filament is 60 mass ppm or more. Generally, new iron such as that obtained from a blast furnace has high purity and an N element amount of less than 60 mass ppm, whereas general recycled iron (i.e., recycled iron that is not highly refined) has an N element amount of 60 mass ppm or more. The steel filament of the present embodiment can be produced using such general recycled iron as a raw material, and since high-level refining is not required, the manufacturing process is not complicated, energy consumption can be reduced, and $CO_2$ emissions can also be reduced, which is preferable from an environmental perspective. From a similar viewpoint, it is preferable that the steel filament has an N element amount of 70 mass ppm or more. Further, from the viewpoint of durability, the N element amount of the steel filament is preferably 200 mass ppm or less, and more preferably less than 90 mass ppm. When the steel filament is used as a reinforcing member for a tire, various loads are applied to the steel filament from various directions during tire manufacture and use. Therefore, as one index of durability, the steel filament is required to have excellent durability against twisting. A steel filament derived from recycled iron with an N element amount of less than 90 mass ppm is particularly excellent in durability against twisting.

The C (carbon) element amount of the steel filament is 0.7 to 0.85 mass%. Steel material with a C element amount of 0.85 mass% or less has high ductility, and even when processed into a steel filament with a small diameter, breakage can be prevented. Therefore, a steel filament made of steel material with a C element amount of 0.85 mass% or less is resistant to breakage even if the diameter is small. Further, recycled iron with a C element amount within the above range does not require high-level refining, is easily obtainable, and a steel filament with a C element amount within the above range can be produced from general recycled iron.

The Cu (copper) element amount of the steel filament is 0.01 to 0.4 mass%, and preferably 0.05 to 0.4 mass%. Recycled iron with a Cu element amount within the above range does not require high-level refining, is easily obtainable, and a steel filament with a Cu element amount within the above range can be produced from general recycled iron.

The Cr (chromium) element amount of the steel filament is 0.05 to 0.3 mass%. Generally, new iron such as that obtained from a blast furnace has high purity and a Cr element amount of less than 0.05 mass%, whereas general recycled iron (i.e., recycled iron that is not highly refined) has a Cr element amount of 0.05 mass% or more. Recycled iron with a Cr element amount within the above range does not require high-level refining, is easily obtainable, and a steel filament with a Cr element amount within the above range can be produced from general recycled iron.

The steel filament of the present embodiment preferably has a diameter of 0.25 mm to 0.6 mm. When the diameter of the steel filament is 0.25 mm or more, it is excellent in strength and durability, and is further resistant to breakage during the drawing process. When the diameter of the steel filament is 0.6 mm or less, for example, when the steel filament is applied to a tire, the steel filament can follow the deformation of the tire, making it resistant to breakage (high durability), and also has the advantage of being lightweight. Thus, a steel filament with a diameter of 0.25 mm to 0.6 mm is resistant to breakage both during the drawing process and during use.

From the viewpoint of durability, it is preferable that the steel filament of the present embodiment satisfies the following formula when the diameter of the filament is X (mm) and the tensile strength of the filament is Y (MPa):

$$4000 - 2000X \leq Y \leq 4500 - 2000X$$

Here, the tensile strength of the filament is determined in accordance with ISO 17832:2009.

The hardness of the surface layer of the steel filament of the present embodiment is preferably 90% to 110% relative to the hardness of the inner layer from the viewpoint of fatigue resistance, and particularly preferably 100%. The hardness can be measured, for example, by Vickers hardness. The surface layer of the filament refers to the layer up to a depth of 0.01 mm from the outermost surface, and the inner side thereof refers to the inner layer of the filament. The hardness can be measured at a depth of 0.005 mm from the outermost surface for the surface layer, and at a region deeper than 0.04 mm for the inner layer.

The steel filament of the present embodiment is produced from recycled iron, and the production method is not particularly limited. For example, the steel filament of the present embodiment can be produced by subjecting steel material derived from scrap iron or steel cord taken from tires to a drawing process.

(Plated Steel Filament)

The plated steel filament of the present embodiment (i.e., a steel filament subjected to plating) comprises the above-described steel filament and a plating layer covering the steel filament. In the plated steel filament of the present embodiment, the total Cu element amount in the steel filament and the plating layer is characterized by being 0.2 to 1.0 mass%.

Here, the Cu element amount of the plated steel filament refers to the content of Cu element in the entirety of the steel filament portion and the plating layer portion.

When the Cu element amount of the plated steel filament is 0.2 mass% or more, rubber-steel adhesion quality can be ensured, and when it is 1.0 mass% or less, the quality of the steel filament can be ensured. A plated steel filament in which the total Cu element amount in the steel filament and the plating layer is 0.2 to 1.0 mass% has high adhesiveness with coating rubber and can be suitably used as a reinforcing member for tires.

The production method of the plated steel filament of the present embodiment is not particularly limited. For example, the plated steel filament of the present embodiment can be produced by plating the surface of the above-described steel filament. Examples of plating include brass plating, copper plating, and the like, and among these, brass plating is preferable from the viewpoint of adhesiveness with coating rubber. In brass plating, the ratio of copper to zinc (copper : zinc) is preferably in the range of 60:40 to 70:30 by mass.

<Reinforcing Cord for Belt Layer of Tire>

The reinforcing cord for a belt layer of a tire of the present embodiment comprises the above-described steel filament.

The reinforcing cord for a belt layer of a tire of the present embodiment contains the above-described steel filament derived from recycled iron, and is highly durable and can contribute to the recycling of resources.

The structure of the reinforcing cord (steel cord) for the belt layer is not particularly limited, but examples include:

(1) a layer-twisted structure such as an L+M structure or L+M+N structure, in which M or M+N sheath filaments (where M and N are integers greater than 1) are twisted around L core filaments (where L is an integer of 1 or more; the core filaments may be twisted together or bundled without twisting);
(2) a 1×N structure in which two or more steel filaments are twisted spirally (where N is an integer of 2 or more);
(3) a multiple-twisted structure in which a plurality of cords of the above-described layer-twisted structure or 1×N structure are arbitrarily combined and twisted together;
(4) a monofilament structure in which steel filaments are arranged in a row without being twisted together.

In the above L+M+N structure, 1×N structure, and multiple-twisted structure, the steel filaments may be arranged with gaps between the steel filaments without being in close contact with each other. In such a structure, coating rubber easily penetrates into the inside of the reinforcing cord (steel cord), thereby further improving the durability of the reinforcing cord.

Further, the surface of the steel filament or the surface of the reinforcing cord may be coated with a resin. In such a structure, the durability of the reinforcing cord is further improved. Examples of the resin include thermoplastic resins and thermoplastic elastomers. Examples of thermoplastic resins include polyamide-based thermoplastic resins, polyester-based thermoplastic resins, olefin-based thermoplastic resins, polyurethane-based thermoplastic resins, vinyl chloride-based thermoplastic resins, polystyrene-based thermoplastic resins, and the like. On the other hand, examples of thermoplastic elastomers include polyamide-based thermoplastic elastomers (TPA), polyester-based thermoplastic elastomers (TPC), polystyrene-based thermoplastic elastomers (TPS), polyurethane-based thermoplastic elastomers (TPU), olefin-based thermoplastic elastomers (TPO), thermoplastic rubber crosslinked bodies (TPV), or other thermoplastic elastomers (TPZ), and the like.

<Tire>

The tire of the present embodiment comprises the above-described steel filament.

The tire of the present embodiment contains the above-described steel filament derived from recycled iron, and is highly durable and can contribute to the recycling of resources.

The tire of the present embodiment preferably comprises a belt layer including the steel filament and a belt protective layer disposed on a tire radial direction outer side of the belt layer. By disposing a belt protective layer on the tire radial direction outer side of the belt layer, the durability of the belt layer can be further improved.

Here, the total strength of the belt layer and the belt protective layer is preferably 40 to 120 kN. When the total strength of the belt layer and the belt protective layer is 40 kN or more, the durability of the tire is improved, and when the total strength of the belt layer and the belt protective layer is 120 kN or less, both durability and weight can be balanced.

In the present specification, the total strength of the belt layer and the belt protective layer is a value measured by a tensile test and converted to the strength per 5 cm of the crown portion.

The strength of the belt layer is preferably 15 kN or more, and more preferably 40 kN or more. It is also preferably 120 kN or less. When the strength of the belt layer is 15 kN or more, the durability of the tire is improved, and when the strength of the belt layer is 120 kN or less, both durability and weight can be balanced.

Further, the strength of the belt protective layer is preferably 1 kN or more, and preferably 25 kN or less. When the strength of the belt protective layer is 1 kN or more, the durability of the tire is improved, and when the strength of the belt protective layer is 25 kN or less, both durability and weight can be balanced.

In the present specification, the strength of the belt layer and the belt protective layer is a value measured by a tensile test and converted to the strength per 5 cm of the crown portion.

The belt layer preferably includes a steel cord composed of the above-described steel filament. The structure of the steel cord may be the same as the above-described "reinforcing cord for belt layer," that is, (1) M+N structure, (2) 1×N structure, (3) monofilament structure, and the like can be adopted.

The steel cord in the belt layer preferably has a flat cross-section with a ratio of the major axis to the minor axis of 1.1 or more. When such a steel cord is applied to a tire, by arranging the major axis direction of the outer hull shape of the steel cord along the width direction of the belt layer, the in-plane flexural rigidity of the belt layer can be increased, and the durability of the belt layer can be further improved.

The belt protective layer preferably includes an organic fiber cord. Further, the organic fiber cord preferably has an elastic modulus of 4.0 mN/(dtex·%) or more. By applying an organic fiber cord with an elastic modulus of 4.0 mN/(dtex·%) or more to the belt protective layer, the durability of the belt layer can be further improved.

Here, the elastic modulus of the organic fiber cord is a value calculated by converting the slope (N/%) between the load corresponding to 1% elongation and the load corresponding to 2% elongation in the load-elongation curve of the organic fiber cord measured at room temperature (23°C) to a value per 1 dtex. Further, various physical properties of the organic fiber cord can be measured in accordance with JIS L 1013 "Test methods for chemical fiber filament yarns."

The material of the organic fiber cord is not particularly limited, but examples include polyesters such as polyethylene terephthalate (PET), polyethylene naphthalate (PEN) and polyethylene furan dicarboxylate (PEF), nylons® such as 6-nylon®, 6,6-nylon® and 4,6-nylon, and celluloses such as rayon and lyocell. Among these, polyethylene terephthalate is preferable, that is, the organic fiber cord as a reinforcing member for the belt protective layer is preferably a cord made of polyethylene terephthalate (hereinafter sometimes simply referred to as "polyethylene terephthalate cord"). The polyethylene terephthalate cord has higher rigidity than generally used nylon cords and the like, and is excellent in improving the durability of the belt layer.

In order to improve the elastic modulus of the organic fiber cord, it is preferable to perform a dip treatment under high tension. Here, in order to sufficiently increase the elasticity of the organic fiber cord, it is preferable that the tension during the adhesive treatment is $6.9 \times 10^{-2}$ N/tex or more. However, the method for increasing the elasticity of the organic fiber cord is not limited to this, and other methods such as lowering the twist of the organic fiber cord may be used. The adhesive treatment is composed of dry treatment, hot treatment, normalize treatment, and the like, and is performed by appropriately adjusting the temperature and time in addition to the tension. In the present disclosure, the adhesive treatment may be performed by either a one-bath treatment or a two-bath treatment, but it is preferable to perform a two-bath treatment, and it is preferable to apply a tension of $6.9 \times 10^{-2}$ N/tex or more to the cord during the hot treatment of the two-bath process.

The organic fiber cord preferably has a twist coefficient $\alpha$ represented by the following formula (1):

$$\alpha = T \times D^{1/2} \cdots (1)$$

In the formula, $\alpha$ is the twist coefficient, T is the number of twists (turns/100 mm), and D is the total fineness of the cord (dtex). The twist coefficient $\alpha$ of the organic fiber cord is preferably 500 to 2500. When the twist coefficient $\alpha$ of the organic fiber cord is 500 or more, the binding force of the filaments becomes strong, resulting in sufficient adhesion, and when it is 2500 or less, the effect of improving the durability of the belt layer is excellent.

Further, the organic fiber cord preferably has a total fineness of 1000 to 3500 dtex. When the total fineness of the organic fiber cord is 1000 dtex or more, the effect of improving the durability of the belt layer is excellent, and when it is 3500 dtex or less, the embedding can be made dense, and sufficient rigidity per unit width can be ensured.

It should be noted that, since the raw tire expands by several percent in the tire radial direction during vulcanization, if the elastic modulus of the organic fiber cord used for the belt protective layer is high, it may not be able to follow the expansion of the tire during vulcanization molding, and the organic fiber cord in the belt protective layer and the steel cord in the belt layer may come into direct contact without the elastomer (coating rubber) in between. Therefore, it is preferable to design the diameter of the raw tire in advance to a certain size, and to appropriately adjust the tension when forming the belt protective layer by winding the organic fiber cord coated with elastomer, so as to sufficiently ensure the gauge between the cords of the belt layer and the belt protective layer. Accordingly, the organic fiber cord preferably has an elongation rate in the tire after vulcanization with respect to the original length of the cord before vulcanization of 2% or less. When the tire is molded with a cord elongation rate of 2% or less, contact between the organic fiber cord and the belt layer can be suppressed, and separation at the belt edge during running can be prevented.

The raw material of the organic fiber cord is not particularly limited, and may be derived from synthetic products, may be derived from biological sources, may be derived from mechanical recycling by crushing, melting, and re-spinning PET products such as PET bottles, or may be derived from chemical recycling by depolymerizing and repolymerizing PET products such as PET bottles.

The form of the organic fiber cord is not particularly limited, and may be a single-twist structure or a twisted structure (such as a double-twist structure). In the case of a single-twist structure, for example, the raw yarns are aligned and twisted in one direction to obtain a twisted yarn cord. In the case of a double-twist structure, for example, the raw yarns are given a primary twist, then combined in plural and given a secondary twist in the opposite direction to obtain a twisted yarn cord.

It is preferable that the organic fiber cord (particularly, a polyethylene terephthalate cord) is subjected to adhesive treatment with an adhesive composition containing a thermoplastic polymer (A), a thermally reactive-type aqueous urethane resin (B), and an epoxy compound (C), or an adhesive composition further containing a rubber latex (D) in addition to (A) to (C), wherein the main chain of the thermoplastic polymer (A) substantially does not have an addition-reactive carbon-carbon double bond, and has at least one functional group as a pendant group having crosslinkability. By performing adhesive treatment with such an adhesive composition, the adhesiveness to the elastomer (coating rubber) at high temperatures can be improved.

Conventionally, as an adhesive treatment for organic fiber cords (particularly, polyethylene terephthalate cords), a so-called two-bath treatment has been performed, in which epoxy or isocyanate is applied to the cord surface, and then a resin obtained by mixing resorcin, formaldehyde, and latex (hereinafter referred to as RFL resin) is applied thereon. However, in such a method, the resin used in one bath becomes very hard, the strain input to the cord increases, and the cord fatigue resistance may decrease. Also, such a resin can exhibit sufficient cord-elastomer adhesion at room temperature, but the adhesion may decrease drastically at high temperatures of 130°C or higher. In contrast, by using a single-bath mixed solution containing at least one functional group as a pendant group having crosslinkability and a thermoplastic polymer (A) that substantially does not contain an addition-reactive carbon-carbon double bond in the main chain structure, a thermally reactive-type aqueous urethane resin (B), and an epoxy compound (C), it is possible to sufficiently ensure adhesion to the elastomer (coating rubber) even at high temperatures of 180°C or higher without hardening the cord.

The main chain of the thermoplastic polymer (A) is mainly a linear structure, and as the main chain, for example, acrylic polymer, vinyl acetate polymer, ethylene-vinyl acetate copolymer, or other ethylene-based addition polymers, or urethane-based polymeric polymers are preferred. However, the thermoplastic polymer (A) only needs to have the function of suppressing resin fluidity at high temperatures and ensuring resin breaking strength by crosslinking of the functional group of the pendant group, and is not limited to ethylene-based addition polymers and urethane-based polymeric polymers.

As the functional group of the pendant group of the thermoplastic polymer (A), oxazoline group, bismaleimide group, (blocked) isocyanate group, aziridine group, carbodiimide group, hydrazino group, epoxy group, epithio group, and the like are preferred.

The above-mentioned thermoplastic polymer (A), thermally reactive-type aqueous urethane resin (B), epoxy compound (C), and rubber latex (D) may be those described in JP application No. 2023-040157 or those described in JP application No. 2023-030762, respectively.

In the adhesive treatment of the organic fiber cord (particularly, polyethylene terephthalate cord), it is preferable to use a mixture of the three types, i.e., the thermoplastic polymer (A), thermally reactive-type aqueous urethane resin (B), and epoxy compound (C) (adhesive composition) as a single-bath treatment solution, and to use a conventional RFL resin solution as a two-bath treatment solution. In the above adhesive treatment, it is also possible to perform treatment with only a single bath using a mixture of the thermoplastic polymer (A), thermally reactive-type aqueous urethane resin (B), epoxy compound (C), and rubber latex (D) (adhesive composition).

In the above adhesive composition, the proportion (dry mass ratio) of the thermoplastic polymer (A) is preferably 2% to 75%, the proportion (dry mass ratio) of the thermally reactive-type aqueous urethane resin (B) is preferably 15% to 87%, the proportion (dry mass ratio) of the epoxy compound (C) is preferably 11% to 70%, and the proportion (dry mass ratio) of the rubber latex (D) is preferably 20% or less.

On the other hand, from the viewpoint of environmental protection, it is preferable to use a dip treatment solution that does not contain resorcin and formalin as the adhesive composition for the organic fiber cord. As such a dip treatment solution, for example, a composition containing a rubber latex (a) having an unsaturated diene and at least one compound (b) selected from compounds having a skeleton structure composed of polyether and an amine functional group, compounds having an acrylamide structure, polypeptides, polylysine, and carbodiimide can be mentioned. Further, as such a dip treatment solution, for example, a composition containing, in addition to the above rubber latex (a) having an unsaturated diene and compound (b), at least one selected from an aqueous compound (c) having a (thermally dissociable blocked) isocyanate group, polyphenol (d), and polyvalent metal salt (e) can be mentioned.

In addition, as a dip treatment solution not containing resorcin and formalin, a composition containing polyphenols (I) and aldehydes (II) can also be mentioned. Such a composition may further contain at least one of an isocyanate compound (III) and a rubber latex (IV) in addition to the polyphenols (I) and aldehydes (II).

When the adhesive composition for coating (adhesive treatment) the organic fiber cord contains polyphenols (I) and aldehydes (II), even if resorcin is not used in consideration of environmental impact, good adhesiveness can be exhibited.

[Polyphenols (I)]

By including polyphenols (I) as a resin component in the adhesive composition, the adhesiveness to the organic fiber cord can be enhanced. Here, the polyphenols (I) are typically water-soluble polyphenols, and are not particularly limited as long as they are polyphenols other than resorcin (resorcinol). The number of aromatic rings or the number of hydroxyl groups in the polyphenols (I) can be appropriately selected.

From the viewpoint of achieving even better adhesiveness, the polyphenols (I) preferably have two or more hydroxyl groups, and more preferably have three or more hydroxyl groups. When the polyphenols have three or more hydroxyl groups, the polyphenol or a condensate thereof dissolves in the adhesive composition (dip treatment solution) containing water. As a result, the polyphenols can be uniformly distributed in the adhesive composition, thereby achieving even better adhesiveness. Furthermore, when the polyphenols (I) are polyphenols containing a plurality (two or more) of aromatic rings, in each of those aromatic rings, two or three hydroxyl groups are present at the ortho, meta, or para positions.

As the polyphenols (I), for example, those described as polyphenol compounds in WO 2022/130879 A1 can be used. These polyphenols (I) may be used alone or in combination of two or more.

[Aldehydes (II)]

By including aldehydes (II) as a resin component in the adhesive composition in addition to the above polyphenols (I), high adhesiveness can be achieved together with the above polyphenols (I). Here, the aldehydes (II) are not particularly limited and can be appropriately selected according to the required performance. In the present specification, the aldehydes (II) also include derivatives of aldehydes that are generated from aldehydes.

As the aldehydes (II), for example, monoaldehydes such as formaldehyde, acetaldehyde, butylaldehyde, acrolein, propionaldehyde, chloral, butylaldehyde, caproaldehyde, allylaldehyde, or aliphatic dialdehydes such as glyoxal, malonaldehyde, succinaldehyde, glutaraldehyde, adipaldehyde, aromatic ring-containing aldehydes, dialdehyde starch, and the like can be mentioned. These aldehydes (II) may be used alone or in combination of two or more.

The aldehydes (II) preferably are or include aromatic ring-containing aldehydes. This is because even better adhesiveness can be obtained. Also, the aldehydes (II) preferably do not contain formaldehyde. Here, "do not contain formaldehyde" means, for example, that the content of formaldehyde in the total mass of aldehydes is less than 0.5 mass%.

In the adhesive composition, it is preferable that the mass ratio (content of aromatic ring-containing aldehydes/content of polyphenols) of polyphenols and aromatic ring-containing aldehydes in the condensed state is 0.1 or more and 3 or less. In this case, the hardness and adhesiveness of the resin, which is the product of the condensation reaction between the polyphenols and the aromatic ring-containing aldehydes, become more suitable. From the same viewpoint, the mass ratio (content of aromatic ring-containing aldehydes/content of polyphenols) of polyphenols and aromatic ring-containing aldehydes in the adhesive composition is more preferably 0.25 or more, and more preferably 2.5 or less.

It should be noted that the above mass ratio is based on the mass of the dried material (solid content ratio).

Further, the total content of polyphenols (I) and aldehydes (II) in the adhesive composition is preferably 3 to 30 mass%. In this case, even better adhesiveness can be ensured without impairing operability and the like. From the same viewpoint, the total content of polyphenols (I) and aldehydes (II) in the adhesive composition is more preferably 5 mass% or more, and more preferably 25 mass% or less.

It should be noted that the above total content is based on the mass of the dried material (solid content ratio).

[Isocyanate Compounds (III)]

The adhesive composition preferably further contains an isocyanate compound (III) in addition to the above polyphenols (I) and aldehydes (II). In this case, the adhesiveness of the adhesive composition can be further enhanced by the synergistic effect with the polyphenols (I) and aldehydes (II).

Here, the isocyanate compound (III) is a compound that promotes adhesion to the resin material (for example, phenol/aldehyde resin obtained by condensing polyphenols (I) and aldehydes (II)), which is the adherend of the adhesive composition, and is a compound having an isocyanate group as a polar functional group. These isocyanate compounds (III) may be used alone or in combination of two or more.

The isocyanate compound (III) is not particularly limited, but from the viewpoint of further improving adhesiveness, it preferably contains an (blocked) isocyanate group-containing aromatic compound. By including an (blocked) isocyanate group-containing aromatic compound in the adhesive composition, the (blocked) isocyanate group-containing aromatic compound is distributed in the vicinity of the interface between the organic fiber cord and the adhesive composition, resulting in a further adhesion-promoting effect, and by this effect, the adhesiveness of the adhesive composition to the organic fiber cord can be further enhanced.

As the (blocked) isocyanate group-containing aromatic compound, those described in JP application No. 2023-040157 and those described in JP application No. 2023-030762 can be used.

The content of the isocyanate compound (III) in the adhesive composition is not particularly limited, but from the viewpoint of more reliably ensuring excellent adhesiveness, it is preferably 5 to 65 mass%. From the same viewpoint, the content of the isocyanate compound (III) in the adhesive composition is more preferably 10 mass% or more, and more preferably 45 mass% or less.

It should be noted that the above content is based on the mass of the dried material (solid content ratio).

[Rubber Latex (IV)]

The adhesive composition can further substantially contain a rubber latex (IV) in addition to the above polyphenols (I), aldehydes (II), and isocyanate compound (III). Thereby, the adhesive composition can further improve adhesiveness to the rubber member.

Here, the rubber latex (IV) is not particularly limited, and examples include, in addition to natural rubber (NR), synthetic rubbers such as polyisoprene rubber (IR), styrene-butadiene copolymer rubber (SBR), polybutadiene rubber (BR), ethylene-propylene-diene rubber (EPDM), chloroprene rubber (CR), halogenated butyl rubber, acrylonitrile-butadiene rubber (NBR), or vinylpyridine-styrene-butadiene copolymer rubber (Vp). These rubber latexes (IV) may be used alone or in combination of two or more.

When preparing an adhesive composition containing the rubber latex (IV), it is preferable to mix the rubber latex (IV) with the phenols (I) and aldehydes (II) before adding the isocyanate compound (III).

The content of the rubber latex (IV) in the adhesive composition is preferably 20 mass% or more, more preferably 25 mass% or more, and preferably 70 mass% or less, more preferably 60 mass% or less.

The method for producing the adhesive composition is not particularly limited, and examples include a method of mixing and aging raw materials such as polyphenols (I), aldehydes (II), and rubber latex (IV), or a method of mixing and aging polyphenols (I) and aldehydes (II), and then further adding and aging rubber latex (IV). When the raw materials include an isocyanate compound (III), the method may be such that rubber latex (IV) is added and aged, and then the isocyanate compound (III) is added.

The belt protective layer is preferably formed by subjecting the organic fiber cord to adhesive treatment, then coating with elastomer to form a narrow strip, and then continuously spirally winding it in the tire circumferential direction.

The tire of the present embodiment can be applied to various vehicles, for example, it can be applied to all types of tires such as passenger vehicle tires, truck and bus tires, large-sized tires for construction vehicles, and motorcycle tires. Further, the tire of the present embodiment may be a pneumatic tire or a non-pneumatic tire.

(One Embodiment)

Next, one embodiment of the tire of the present disclosure will be exemplified and described in detail with reference to the drawings.

FIG. 1 is a cross-sectional view of one embodiment of the tire of the present disclosure. The tire 100 illustrated in FIG. 1 includes a pair of bead portions 10, a pair of sidewall portions 20, a tread portion 30, a carcass 50 extending in a toroidal shape between bead cores 40 embedded in the bead portions 10, a belt 60 composed of two belt layers 60A and 60B disposed in the tread portion 30 (more specifically, disposed on the tire radial direction outer side of the crown portion of the carcass 50), a belt protective layer 70A (also referred to as a "cap ply") disposed so as to cover the entirety of the belt 60 on the tire radial direction outer side of the belt 60, and a pair of belt protective layers 70B (also referred to as "layer plies") disposed so as to cover only both end portions of the belt protective layer 70A.

In the tire 100 illustrated in FIG. 1, the carcass 50 is composed of a single carcass ply, and includes a main body portion extending in a toroidal shape between a pair of bead cores 40 respectively embedded in the bead portions 10, and a turn-up portion wound up radially outwardly around each bead core 40 from the inner side to the outer side in the tire width direction. However, in the tire of the present disclosure, the number of plies and structure of the carcass are not limited thereto. Here, the carcass ply constituting the carcass 50 is preferably formed by coating a plurality of reinforcing cords extending in a direction substantially perpendicular to the tire circumferential direction (for example, extending at an angle of 70° to 90°) with coating rubber, that is, the carcass 50 is preferably a radial carcass. As the reinforcing cords of the carcass 50, in addition to organic fiber cords such as polyethylene terephthalate cords, nylon cords, and rayon cords, steel cords may also be used.

Further, the belt 60 of the tire 100 illustrated in FIG. 1 is composed of two belt layers 60A and 60B, and each of the belt layers 60A and 60B is usually formed by coating steel cords, which extend inclined with respect to the tire equatorial plane (for example, inclined at an angle of 15° to 40°), with coating rubber. Furthermore, the two belt layers 60A and 60B are laminated such that the steel cords constituting the belt layers 60A and 60B cross each other across the tire equatorial plane, thereby forming the belt 60.

Note that, in FIG. 1, the belt 60 is composed of two belt layers 60A and 60B, but in the tire of the present disclosure, the number of belt layers constituting the belt may be one or more, and is not limited thereto.

Further, in the tire 100 illustrated in FIG. 1, the belt protective layers 70A and 70B are formed by coating reinforcing cords, which are arranged substantially parallel to the tire circumferential direction (for example, at an angle of 0° to 5° with respect to the tire circumferential direction), with coating rubber. The belt protective layers 70A and 70B are formed by continuously spirally winding, in the tire circumferential direction, a narrow strip prepared by coating reinforcing cords with coating rubber. In this case, since there is no joint portion in the tire circumferential direction, the uniformity of the tire is improved, and since there is no joint portion, concentration of strain at the joint portion can also be prevented. As the reinforcing cords of the belt protective layers 70A and 70B, organic fiber cords such as polyethylene terephthalate cords, nylon cords, and rayon cords can be used.

Note that, although the tire 100 illustrated in FIG. 1 includes the belt protective layer 70A and the belt protective layer 70B, a tire in which either or both of the belt protective layer 70A and the belt protective layer 70B are omitted is also one embodiment of the tire of the present disclosure. Further, in the tire 100 illustrated in FIG. 1, each of the belt protective layers 70A and 70B is a single layer, but may be two or more layers.

In the carcass 50, belt 60 (belt layers 60A and 60B), and belt protective layers 70A and 70B, the coating rubber covering the reinforcing members (reinforcing cords) is not particularly limited, and various elastomers can be applied.

The elastomer preferably has a 50% modulus value, measured in accordance with JIS K 6251 (2010), of 1.5 MPa or more, more preferably 1.8 MPa or more, and still more preferably 2.0 MPa or more.

As the main component of the elastomer, examples include natural rubber (NR), isoprene rubber (IR), epoxidized natural rubber, styrene-butadiene rubber (SBR), butadiene rubber (BR, high-cis BR, and low-cis BR), nitrile rubber (NBR), hydrogenated NBR, hydrogenated SBR, and other diene rubbers and their hydrogenated products; ethylene-propylene rubber (EPDM, EPM), maleic acid-modified ethylene-propylene rubber (M-EPM), butyl rubber (IIR), isobutylene-aromatic vinyl or diene-based monomer copolymers, acrylic rubber (ACM), ionomers, and other olefin-based rubbers; Br-IIR, Cl-IIR, brominated isobutylene-para-methylstyrene copolymers (Br-IPMS), chloroprene rubber (CR), hydrin rubber (CHR), chlorosulfonated polyethylene rubber (CSM), chlorinated polyethylene rubber (CM), maleic acid-modified chlorinated polyethylene rubber (M-CM), and other halogen-containing rubbers; methylvinyl silicone rubber, dimethyl silicone rubber, methylphenylvinyl silicone rubber, and other silicone rubbers; polysulfide rubber and other sulfur-containing rubbers; vinylidene fluoride-based rubbers, fluorine-containing vinyl ether-based rubbers, tetrafluoroethylene-propylene-based rubbers, fluorine-containing silicone-based rubbers, fluorine-containing phosphazene-based rubbers, and other fluororubbers; and styrene-based elastomers, olefin-based elastomers, ester-based elastomers, urethane-based elastomers, polyamide-based elastomers, and other thermoplastic elastomers. The 50% modulus value of the elastomer (coating rubber) is a value measured in accordance with JIS K 6251 (2010) after vulcanizing the rubber composition of each sample at 145°C for 40 minutes to obtain vulcanized rubber.

In addition, the elastomer may be appropriately blended with sulfur, vulcanization accelerator, and carbon black, as well as antioxidant, zinc oxide (zinc white), stearic acid, and other additives commonly used in rubber products such as tires.

EXAMPLES

The present disclosure will be further described in detail below with reference to examples, but the present disclosure is not limited in any way to the following examples.

(Steel Filaments for Testing)

A steel filament 1 and a steel filament 2 produced from recycled iron derived from an electric furnace were prepared. Here, the N element amount of the steel filament 1 measured by spark discharge atomic emission spectrometry was 71 mass ppm, and the N element amount of the steel filament 2 measured by spark discharge atomic emission spectrometry was 90 mass ppm. The durability against twisting of these steel filaments was evaluated by the following method.

(Twisting Test)

Both ends of a 20 cm long test steel filament were fixed, and the filament was twisted by rotating in one direction (clockwise with respect to the axis of the steel filament), and the total number of rotations until the test steel filament broke was determined and evaluated according to the following criteria. The results are presented in Table 1.

Excellent: Total number of rotations until breakage is 50 or more
Good: Total number of rotations until breakage is 20 to 49
Poor: Total number of rotations until breakage is 19 or less

[Table 1]

|  | Steel filament 1 | Steel filament 2 |
|---|---|---|
| Nitrogen amount (mass ppm) | 71 | 90 |
| Evaluation result of twisting test | Excellent | Poor |

From Table 1, it can be seen that the steel filament 1, with an N element amount of less than 90 mass ppm, is excellent in durability against twisting.

INDUSTRIAL APPLICABILITY

The steel filament and plated steel filament of the present disclosure can be used for tires and the like.

REFERENCE SIGNS LIST

100: Tire
10: Bead portion
20: Sidewall portion
30: Tread portion
40: Bead core
50: Carcass
60: Belt
60A, 60B: Belt layer
70A, 70B: Belt protective layer

**Claims**

1.  A steel filament derived from recycled iron,
    wherein an N element amount is 60 mass ppm or more, a C element amount is 0.7 to 0.85 mass%, a Cu element amount is 0.01 to 0.4 mass%, and a Cr element amount is 0.05 to 0.3 mass%.

2.  The steel filament according to claim 1, wherein the Cu element amount is 0.05 to 0.4 mass%.

3.  The steel filament according to claim 1, wherein a diameter is 0.25 mm to 0.6 mm.

4.  A plated steel filament comprising the steel filament according to claim 1 and a plating layer covering the steel filament, wherein a total Cu element amount in the steel filament and the plating layer is 0.2 to 1.0 mass%.

5.  A reinforcing cord for a belt layer of a tire, comprising the steel filament according to claim 1.

6.  A tire comprising the steel filament according to claim 1.

7.  The tire according to claim 6, comprising a belt layer including the steel filament and a belt protective layer disposed on a tire radial direction outer side of the belt layer,
wherein a total strength of the belt layer and the belt protective layer is 40 to 120 kN.

FIG. 1

## INTERNATIONAL SEARCH REPORT

| International application No. |
| --- |
| **PCT/JP2024/009635** |

| A. | CLASSIFICATION OF SUBJECT MATTER |
| --- | --- |

*D07B 1/06*(2006.01)i; *B60C 9/00*(2006.01)i; *B60C 9/20*(2006.01)i; *B60C 19/00*(2006.01)i
FI:   D07B1/06 A; B60C9/00 K; B60C9/20 E; B60C19/00 L

According to International Patent Classification (IPC) or to both national classification and IPC

| B. | FIELDS SEARCHED |
| --- | --- |

Minimum documentation searched (classification system followed by classification symbols)

D07B1/06; B60C9/00; B60C9/20; B60C19/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | カーボンニュートラルを踏まえた我が国金属産業の持続的発展に向けた調査事業, 日鉄総研株式会社, February 2022 [online], Internet <URL: https://www.meti.go.jp/meti_lib/report/2021FY/000080.pdf>, [retrieved on 27 May 2024], (NIPPON STEEL RESEARCH INSTITUTE CORPORATION), non-official translation (Research project for sustainable development of Japan's metal industry based on carbon neutrality) pages 33-34 | 1-4 |
| Y | | 1-7 |
| Y | JP 2020-76020 A (EVER CLEAN KK) 21 May 2020 (2020-05-21) paragraph [0016] | 1-7 |
| Y | JP 2005-112065 A (BRIDGESTONE CORP.) 28 April 2005 (2005-04-28) claim 1 | 7 |
| A | JP 2021-161445 A (NIPPON STEEL CORP.) 11 October 2021 (2021-10-11) entire text | 1-7 |

☐ Further documents are listed in the continuation of Box C.   ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 May 2024** | **04 June 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/009635**

| Patent document cited in search report | | Publication date (day/month/year) | Patent family member(s) | | | Publication date (day/month/year) |
|---|---|---|---|---|---|---|
| JP | 2020-76020 A | 21 May 2020 | JP | 6571260 | B1 | |
| JP | 2005-112065 A | 28 April 2005 | US claim 1 | 2007/0006957 | A1 | |
| | | | WO | 2005/032854 | A1 | |
| | | | EP | 1671813 | A1 | |
| | | | CN | 1863684 | A | |
| | | | ES | 2319999 | T | |
| JP | 2021-161445 A | 11 October 2021 | (Family: none) | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3753965 A1
- JP 2023040157 A
- JP 2023030762 A
- WO 2022130879 A1